# EUROPEAN PATENT APPLICATION

(11) **EP 2 063 400 A1**
(43) Date of publication of application: **27.05.2009**
(21) Application number: 07291397.3
(22) Date of filing: 23.11.2007
(51) Int. Cl.: G07C 9/00, G06F 21/00, G07F 7/10

(54) **Virtual security access module**

(71) Applicant: Gemalto SA, 92190 Meudon (FR)
(72) Inventor: Perin, Enrico c/o Axalto SA Intellectual Property DP, 92197 Meudon Cédex (FR); Meunier, Alain c/o Axalto SA Intellectual Property DP, 92197 Meudon Cédex (FR)
(74) Representative: Wlodarczyk, Lukasz Georges Kazimierz

(57) **Abstract**

The invention relates to a system comprising a portable token (SC), a security access module (SAM), and a personalization device (PERSO_DEV). The personalization device (PERSO_DEV) is set to rely on the security access module (SAM) in order to authenticate the portable token (SC). The personalization device (PERSO_DEV) is set to load personalized data into the portable token (SC). The security access module (SAM) is embedded in the portable token (SC). The invention also relates to a method for a personalization device (PERSO_DEV) to load personalized data into a portable token (SC).

## Description

The invention relates to a system and method for personalizing a portable token, wherein the portable token is authenticated by a SAM (Security Access Module). The invention relates more particularly to public transport systems in which the ticket consists of a re-loadable electronic portable token, which has to be secure enough to prevent fraud.

As known in the art, a SAM is a secure entity (such as an electronic chip equipped with security software) offering high level of protection against attacks. A SAM is typically used to store sensitive data such as keys. A SAM may implement authentication algorithms. A typical SAM may manage a set of portable tokens, store a master key, and be able to compute a key specific to each portable token in the set in order to authenticate the portable tokens. Such key computation may consist in diversifying the master key, for example if the master key is a symmetric key (AES, 3DES, etc.), the SAM may encrypt a serial number of the portable token with the master key. The result of this encryption is the diversified key of the portable token (which needs to be stored in the portable token, for example during personalization of the portable token). If each portable token has a unique serial number, each diversified key is unique, and the SAM may request the portable token to encrypt a challenge with the diversified key, while performing the same encryption itself. If the results match, the SAM may then consider that the portable token is authentic. SAMs are often available in the form of smart cards. SAMs are often used in conjunction with a system which level of security is not sufficient (e.g. a server which can potentially be hacked), or with systems which are under the control of an organization different from the organization issuing the sensitive data. Such organization may therefore decide to store sensitive data in the SAM (which it controls) and to provide the SAM to the organization in charge of operating the system.

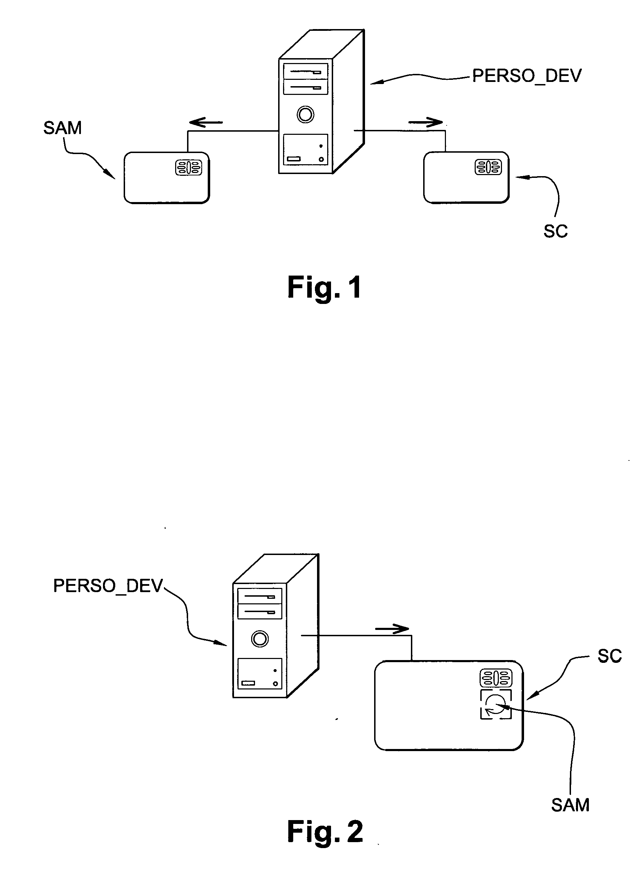

SAMs are used in transport systems. For example, in order to personalize a portable token consisting of a contact-less transport card based on Calypso specification, a SAM is needed on the personalization device, which is the machine in charge of loading personalized data into the contact-less card. Personalized data may comprise keys, access rights (e.g. one month access to all trains within Paris area, or one week access to all buses in Paris and Paris suburbs, etc.), and could also contain personal information such as first and last name of the card-holder (the user of the transportation system), his address, his date of birth, his identity photo, etc. According to the Calypso specification, the SAM encrypts sensitive information with DES-X, according to a protocol designed by Innovatron. To be more specific, when the user of a Calypso compliant portable token (a contact-less card) wants to personalize his portable token (e.g. to take out a season ticket), the following steps typically take place, as illustrated on Figure 1 which shows a state of the art system:
- The portable token SC sends a challenge to the personalization device PERSO_DEV and a session is open.
- Within the session, a Calypso secure session is open.
- The personalization device PERSO_DEV sends a command (typically an APDU command normalized by ISO) both to the portable token SC and to the security access module SAM. Both the security access module SAM and the portable token SC compute a MAC (message authentication code, a well known type of symmetric key based signature) of the command.
- The personalization device PERSO_DEV may send more commands (typically about 3-4 commands per Calypso secure session) and the MAC is computed as for the first command, taking the previously computed MAC into account. No more than about 3-6 commands can typically be sent in a single Calypso secure session because of the limited size of the command buffer of the security access module SAM. Old tokens typically accept only 3 commands while latest releases typically accept up to 6 commands.
- Once all commands have been sent, the security access module SAM and the portable token SC compare the MAC they computed respectively. If they match, all commands which were recorded by the portable token SC (but which were not yet executed) are executed, and the command buffers are freed. Such commands may typically consist in creating or deleting files, writing personalized data into existing files, etc.
- Then, if more commands need to be sent to the portable token SC in order to carry out the personalization, a new Calypso secure session needs to be open as explain above, until all commands are processed.

The above approach typically takes place in a factory. A customer (typically the operator of the public transport network) orders a set of portable tokens. A factory is typically equipped with at least one personalization device comprising up to 12 (typically) security access modules, i.e. the personalization device can typically personalize up to 12 portable tokens at a time.

A problem with the above described use of SAMs is the fact that it is suitable for a closed environment such as a factory, but not optimal in a more open system. Only a limited number of portable tokens can be personalized at a time (typically 12). The personalization is heavily dependent on the quality of the communication between the personalization device, the SAM and the portable token. For example if one Calypso secure session fails, the commands of that session are not executed. A complex software then needs to be put in place in order either to restart the whole personalization, which may require cancelling previously executed Calypso secure sessions (a possibly very complex task), or to resume the personalization where it stopped i.e. after the last successful Calypso secure session.

It is an object of the invention to propose a more flexible system which maintains (or minimally affects) existing protocols in place in state of the art systems but which is not limited by the constraint of existing SAMs.

One possibility to solve the problem consists in using a HSM (hardware security module), which is a sort of super SAM, i.e. a much more powerful piece of equipment which can perform the same tasks as a SAM but much faster. However, this solution is not so convenient in the sense that it affects significantly existing protocols. An HSM solves the issue of having one physical SAM per token perso/reload request, is faster than basic SAMs, has not the same buffer limitations as regular SAMs, and can manage load balancing issues. But with an HSM it is still required, for example in the context of Calypso, to keep a Calypso session (secure and not secure) open during the whole personalization, which is subject to network issues if there's an unreliable network connection between the HSM and the portable token.

The problem is therefore preferably solved thanks to the system according to claim 1.

The invention and its advantages will be explained more in details in the following specification referring to the appended drawings, in which Figure 1 represents a state of the art system, Figure 2 represents a system according to a possible embodiment of the invention, Figure 3 represents an improved system wherein the personal tokens can be personalized via a personal computer, and Figure 4 represents an improved system wherein the personal tokens can be personalized via a mobile network, using a mobile phone.

A system according to one embodiment of the invention comprises a portable token SC, a security access module SAM, and a personalization device PERSO_DEV. The personalization device PERSO_DEV is set to rely on the security access module SAM in order to authenticate the portable token SC. The personalization device PERSO_DEV is set to load personalized data into the portable token SC. The security access module SAM is embedded in the portable token SC, which is advantageous since the communications between the security access module SAM and the potable token SC occur within the portable token SC and are not prone to network errors or other communication error. It is also advantageous due to the scalability of the system, since each portable token SC may be provided with an embedded security access module SAM, there is no more need for standalone security access modules which number constitutes a bottleneck.

In preferred embodiments, the portable token SC is a smart card, such as a contact-less smart card, a contact smart card, or a combi card (which is both contact and contact-less).

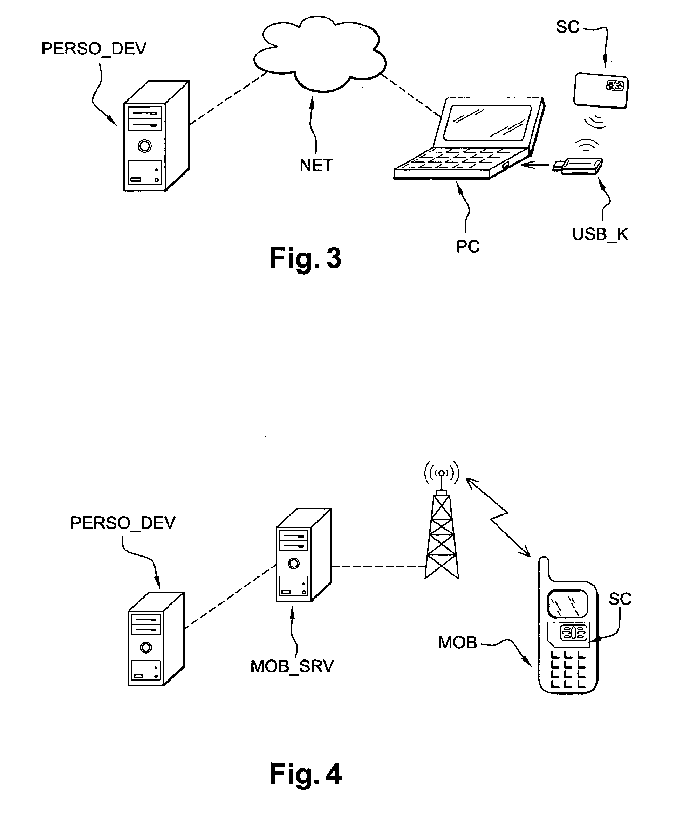

In a preferred embodiment illustrated on Figure 3, the system further comprises a USB key USB_K (which can for example be an NFC reader, NFC standing for Near Field Communication) and a personal computer PC equipped with a USB port. The personal computer PC and the personalization device PERSO_DEV are equipped with network cards (Ethernet, Wifi, Wimax, etc.) allowing them to communicate through a network NET such as the Internet. The portable token SC is connectable to the USB key USB_K. The connection may be a contact or contact-less connection (or both). It is possible for a user of the portable token SC to connect his portable token SC to his personal computer PC (e.g. from home) via the USB key USB_K, in order for example to reload it. The USB key USB_K may comprise slot (e.g. smart card slot) in order to insert the portable token inside it. The USB key USB_K may have electrical contacts for a wired connection (e.g. ISO 7816) which may allow a wired communication between the USB key USB_K and the portable token SC. The USB key may also have a oontact-less interface in order for the user to use and/or personalize his portable token SC by simply bringing it close to the USB key USB_K or inserting it in a slot close to the contact-less interface of the USB key USB_K (provided the portable token SC has a contact-less interface as well).

According to an embodiment illustrated on Figure 4, the system may comprise a mobile phone MOB, to which the portable token SC is connectable. Of course the system can comprise both a USB key USB_K and a mobile phone MOB. The connection may be a contact or a contact-less connection (NFC etc.). The portable token SC may be inserted inside the mobile phone MOB, for example the portable token SC may be a SIM smart card. But the portable token may also be distinct from the SIM card (or other UICC) of the mobile phone (in case the mobile phone has an UICC). For example, the portable token could be a secure removable element such as a micro SD card. The portable token SC may have a contact-less capability (e.g. via an RF chip), the antenna being either inside the portable token SC, or inside the mobile phone MOB, in which case electrical contacts of the portable token SC have to be connected with electrical contacts of the mobile phone MOB antenna. For example the portable token SC may be a SIM card with a connection to an antenna embedded in the mobile phone.

Alternatively, the portable token may be a mobile phone (which makes no difference from the system point of view). In such case, the mobile phone may incorporate a piece of hardware and/or software which provides the features of the portable token as described herein, in addition to the other features already available in the mobile phone.

The system wherein the portable token is a mobile phone or is connectable with a mobile phone MOB may further comprise a mobile network server MOB_SRV (for example an OTA server). The mobile network server MOB_SRV may consist of one or more physical server. The mobile network server MOB_SRV may be part of the same physical server (same hardware) as the personalization device PERSO_DEV. The personalization device PERSO_DEV may be set to load personalized data into the portable token SC through the mobile network server MOB_SRV, which is advantageous since the portable token may be personalized at any time and in any place, as long as the mobile network is available. The fact that the SAM is embedded in the portable token is then particularly advantageous, because even if the mobile network is bad (e.g. the user may go through a tunnel, or the weather may be bad and affect the quality of radio communications, or the mobile network may be overloaded), a separate security access module SAM does not need to be dedicated to the portable device during an extended period of time linked to the poor networking conditions. Such system is scalable, and may allow millions of users (not simply 12 users at a time) to simultaneously personalize their portable token, e.g. at the end of the month, when a new monthly subscription needs to be paid for.

In preferred systems the portable token SC comprises a microprocessor. The security access module SAM comprises a piece of software stored in the portable token SC and executable by the processor. This piece of software may for example be a java applet or a dot net applet. The applet in the portable token SC may carry out the same tasks as those managed by the physical security access modules SAM according to state of the art systems. This applet is therefore preferably developed using the same algorithms as those used in a regular physical security access module SAM. According to a preferred embodiment, such applet is instantiated within the portable token SC. The portable token may comprise security domains, in which case the applet can be instantiated in the same security domain as the one used by the service provider, which may be for example the transport organization requiring a Calypso applet implementing the features of a portable token according to state of the art. In case an OTA server is used, the SAM applet may also, which is better, be instantiated in a Trusted Service Manager Security Domain (TSM SD) which manages the download and personalization by OTA on behalf of the service provider. After instantiation, the applet preferably receives an issuer key (e.g. via an OTA server), using secure communication means (thanks to Global Platform for example). In order to improve the security, such key can be derived from a master issuer key. Then a personalization script (e.g. a Calypso script) can be securely (thanks to Global Platform) sent to the portable token SC, and executed locally with the SAM applet. Once the personalization of the portable token SC is completed, the SAM applet and the issuer key can optionally be erased from the portable token SC. Such system is advantageous, in particular in the context of Calypso compliant systems, since there are possibly as many SAM applets as there are portable tokens SC requesting a personalization. Also, the session communication between the personalization device PERSO_DEV, portable token SC and security access module SAM is kept open inside the portable token SC, and it is almost impossible to have a session broken (except for example if the power supply for the portable token SC fails during the session, but the probability is quite low because the personalization is very fast with this architecture). The SAM applet preferably comprises a big buffer, i.e. bigger than, for example, the buffer standardized in Calypso. This avoids the need for multiple Calypso secure sessions for personalizing the portable token (all commands can be sent in a single session).

According to preferred embodiments, the system further comprises a contact-less terminal (e.g. a contact-less reader in a bus station or inside a tramway). The portable token SC comprises a contact-less interface. The contact-less terminal is set to grant or deny access to the portable token SC based in particular on the personalized data (which may comprise transport credits). For example, the user is allowed inside the metro system only if his portable token SC contains enough credits.

The invention also relates to a method for a personalization device PERSO_DEV to load personalized data into a portable token SC. The personalization device PERSO_DEV is set to rely on a security access module SAM in order to authenticate the portable token SC. The security access module SAM is embedded in the portable token SC. All system embodiments and improvements described above are equally applicable to this method.

## Claims

1. System comprising a portable token (SC), a security access module (SAM), and a personalization device (PERSO_DEV), wherein the personalization device (PERSO_DEV) is set to rely on the security access module (SAM) in order to authenticate the portable token (SC), wherein the personalization device (PERSO_DEV) is set to load personalized data into the portable token (SC), **characterized in that** the security access module (SAM) is embedded in the portable token (SC).

2. System according to claim 1, wherein the portable taken (SC) is a smart card (SC).

3. System according to claim 2, further comprising a USB key (USB_K) and a personal computer (PC) equipped with a USB port, wherein the personal computer (PC) and the personalization device (PERSO_DEV) are equipped with network cards allowing them to communicate through a network (NET) such as the Internet, wherein the smart card (SC) is connectable to the USB key (USB_K).

4. System according to claim 2, further comprising a mobile phone (MOB), wherein the smart card (SC) is connectable to the mobile phone (MOB).

5. System according to claim 1, wherein the portable token is a mobile phone.

6. System according to claim 4 or 5, further comprising a mobile network server (MOB_SRV), the personalization device (PERSO_DEV) being set to load personalized data into the portable token through the mobile network server (MOB_SRV).

7. System according to any previous claim, wherein the portable token (SC) comprises a microprocessor, the security access module (SAM) comprising a piece of software stored in the portable token (SC) and executable by the processor.

8. System according to any previous claim, further comprising a contact-less terminal, the portable token (SC) comprising a contact-less interface, the contact-less terminal being set to grant or deny access to the portable token (SC) based in particular on the personalized data.

9. Method for a personalization device (PERSO_DEV) to load personalized data into a portable token (SC), wherein the personalization device (PERSO_DEV) is set to rely on a security access module (SAM) in order to authenticate the portable token (SC), **characterized in that** the security access module (SAM) is embedded in the portable token (SC).
